# EUROPÄISCHE PATENTSCHRIFT

(11) **EP 1 006 450 B1**
(45) Veröffentlichungstag und Bekanntmachung des Hinweises auf die Patenterteilung: **03.09.2008**
(21) Anmeldenummer: 99123482.4
(22) Anmeldetag: 25.11.1999
(51) Int. Cl.: G06F 13/14, G06F 13/40

(54) **Vorrichtung zur bidirektionalen Signalübertragung**
Apparatus for bidirectional signal transfer
Appareil de transfert bidirectionnel de signaux

(30) Priorität: 01.12.1998 DE 19855372
(43) Veröffentlichungstag der Anmeldung: 07.06.2000
(73) Patentinhaber: ROBERT BOSCH GMBH, 70442 Stuttgart (DE)
(72) Erfinder: Nikolai, Horst-Dieter, Dr., 64720 Michelstadt (DE); Brehm, Horst, 64711 Erbach (DE)

(56) Entgegenhaltungen:
- US-A- 4 680 491
- US-A- 5 623 611
- "ADAPTER. SMALL COMPUTER SYSTEM INTERFACE SINGLE ENDED TO DIFFERENTIAL" IBM TECHNICAL DISCLOSURE BULLETIN, IBM CORP. NEW YORK, US, Bd. 36, Nr. 11, 1. November 1993 (1993-11-01), Seiten 331-333, XP000424877 ISSN: 0018-8689

## Beschreibung

### Stand der Technik

Die Erfindung geht aus von einer Vorrichtung zur bidirektionalen Signalübertragung nach der Gattung des unabhängigen Anspruchs. Zur sicheren Signalübertragung weit voneinander entfernt liegender kommunizierender Geräte werden zusätzlich Sender und Empfänger angeboten, die über ein bis zu 300 m langes Kabel miteinander verbunden sind. Der Einfluß der Kabellänge kann individuell am Sender abgeglichen werden. Für die Realisierung von Sender und Empfänger sind jedoch Mikroprozessoren notwendig, so daß solche Systeme relativ komplex und damit teuer sind.

### Vorteile der Erfindung

Die erfindungsgemäße Vorrichtung zur bidirektionalen Signalübertragung zwischen einem Rechner und einer Peripherie weist eine Arbitrierungslogik zur Überwachung und Beeinflussung der Zugriffsberechtigung auf zumindest eine Signalübertragungsleitung auf. Ein ebenfalls vorgesehener Transceiver setzt zumindest ein Absolutsignal in differentielle Signale um. Die Arbitrierungslogik erhält oder gibt das zumindest eine Absolutsignal über die Absolutsignalübertragungsleitung ab. Die Arbitrierungslogik gibt zumindest ein Arbitrierungsausgangssignal an den Transceiver ab. Der Transceiver führt der Arbitrierungslogik zumindest ein Arbitrierungseingangssignal zu. Dank der Arbitrierungslogik werden Datenkollisionen, die auf Grund einer bidirektionalen Standardverbindung zwischen Rechner und Peripherie entstehen könnten, vermieden, da die Arbitrierungslogik bei vorliegender Datenübertragung in der einen Richtung eine Datenübertragung in die andere Richtung nicht zuläßt. Bei einem differentiellen Signal wird auch das Bezugspotential auf einer zweiten Signalübertragungsleitung mitgeführt. Störungen treten bei beiden differentiellen Signalen in gleicher Weise auf und können nach der Übertragungsstrecke mit Hilfe einer subtrahierenden Überlagerung der beiden differentiellen Signale eliminiert werden. Die Umsetzung des Absolutsignals in ein differentielles Signal und umgekehrt durch den Transceiver ermöglicht die Übertragung des störunanfälligen differentiellen Signals auch über lange Übertragungswege. Bei dem Transceiver kann auf einen Standardbaustein zurückgegriffen werden, der beispielsweise auch bei der Vernetzung von Kraftfahrzeugsteuergeräten über ein Bus-System Verwendung findet. Die Arbitrierungslogik kann als reine Hardwarelösungen realisiert werden, ohne daß spezielle Prozessoren erforderlich wären. Die erfindungsgemäße Vorrichtung zur bidirektionalen Signalübertragung trägt zu einer Erhöhung der Übertragungssicherheit bei geringen Herstellkosten bei.

In einer zweckmäßigen Weiterbildung sind Arbitrierungslogik und Transceiver zu einer Baugruppe integriert. Die elektronischen Bauteile lassen sich vorzugsweise auf einer Platine anordnen. Dadurch läßt sich diese Baugruppe als Steckkarte leicht in den Rechner oder die Peripherie einfügen.

Vorzugsweise wird das Absolutsignal einem Schmitt-Trigger zugeführt, dessen Ausgangssignal an die Arbitrierungslogik weitergegeben wird. Dadurch werden instabile Zustände in der Arbitrierungslogik vermieden. Die Störanfälligkeit der erfindungsgemäßen Vorrichtung kann dadurch verringert werden.

Weitere zweckmäßige Weiterbildungen ergeben sich aus weiteren abhängigen Ansprüchen und aus der Beschreibung.

### Zeichnung

Ein Ausführungsbeispiel der Erfindung ist in der Zeichnung dargestellt und wird im folgenden näher beschrieben. Es zeigen die Figur 1 ein Blockschaltbild, die Figuren 2 und 3 mögliche schaltungstechnische Realisierungen sowie die Figuren 4a - 4e mögliche Signalverläufe des Ausführungsbeispiels.

### Beschreibung des Ausführungsbeispiels

Ein Rechner 10 tauscht über eine Absolutsignalübertragungsleitung 16 ein Absolutsignal 46 mit einer Signalverarbeitung 12 aus. Die Signalverarbeitung 12 ist über eine zweiadrige differentielle Signalübertragungsleitung 18 mit einer weiteren, identisch aufgebauten Signalverarbeitung 12 verbunden. Über die differentielle Signalübertragungsleitung 18 werden ein erstes differentielles Signal 48 und ein zweites differentielles Signal 50 bidirektional übertragen. In gleicher Weise ist die weitere Signalverarbeitung 12 über eine weitere Absolutsignalübertragungsleitung 16 zum Austausch eines bidirektionalen Absolutsignals 46 mit einer Peripherie 14 verbunden.

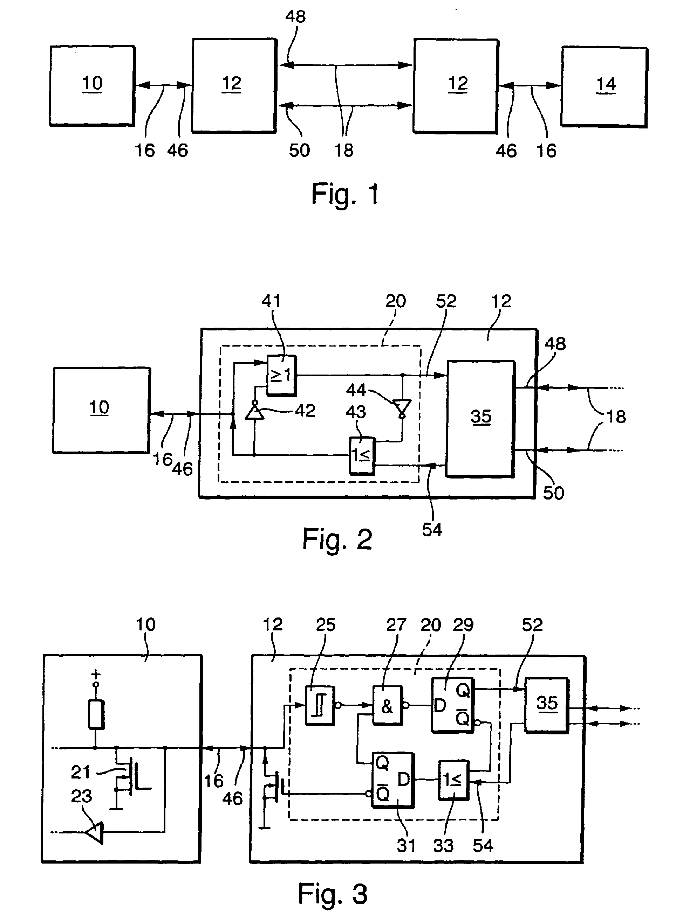

Im Ausführungsbeispiel gemäß Figur 2 ist die Signalverarbeitung 12 in ihrer prinzipiellen Funktionsweise dargestellt. Das den bidirektionalen Datenaustausch mit dem Rechner 10 über die Absolutsignalübertragungsleitung 16 sicherstellende Absolutsignal 46 wird an den ersten Eingang eines ersten Oder-Gatters 41 gelegt. Der Ausgangs des ersten Oder-Gatters 41 wird als Arbitrierungsausgangssignal 52 einem Transceiver 35 und einem zweiten Invertierer 44 zugeführt. Ein zweites Oder-Gatter 43 erhält als Eingangsgröße zum einen das Ausgangssignal des zweiten Invertierers 44 sowie ein von dem Transceiver 35 bereitgestelltes Arbitrierungseingangssignal 54. Das Ausgangssignal des zweiten Oder-Gatters 43 wird über einen ersten Invertierer 42 an den zweiten Eingang des ersten Oder-Gatters 41 gelegt. Außerdem kann das Ausgangssignal des zweiten Oder-Gatters 43 der Absolutübertragungsleitung 16 als an den Rechner 10 zu sendendes Absolutsignal 46 zugeführt werden. Der Tansiver 35 sendet/empfängt das erste und zweite differentielle Signal 48, 50, die in einer zweiadrigen differentiellen Signalübertragungsleitung 18 geführt werden.

Das Ausführungsbeispiel nach Figur 3 unterscheidet sich in der Funktionsweise nicht von demjenigen der Figur 2. Die Realisierung ist detaillierter und hinsichtlich der Logikbausteine optimiert. In dem Rechner 10 ist typisiert ein Sendetransistor 21 dargestellt, der das vom Rechner 10 generierte Signal als Absolutsignal 46 auf die Absolutsignalübertragungsleitung 16 gibt. Ein zu empfangendes Absolutsignal 16 wird über einen Empfangsverstärker 23 einer weiteren Auswerteeinheit zugeführt. Das Absolutsignal 46 wird an den Eingang eines Schmitt-Triggers 25 gelegt. Dessen invertierender Ausgang ist eine Eingangsgröße eines Und-Gatters 27. Der invertierte Ausgang des Und-Gatters 27 dient als Eingangsgröße eines ersten D-Flip-Flops 29. Das Ausgangssignal des ersten D-Flip-Flops 29 dient dem Transceiver 35 als Eingangsgröße. Der invertierende Ausgang des ersten D-Flip-Flops 29 dient einem Oder-Gatter 33 als erste Eingangsgröße. Der Transceiver 35 stellt dem Oder-Gatter 33 die zweite Eingangsgröße zur Verfügung. Der Ausgang des Oder-Gatters 33 wird einem zweiten D-Flip-Flop 31 als Eingangsgröße zugeführt. Dessen Ausgang wird auf den Eingang des Und-Gatter 27 gelegt. Aus dem invertierenden Ausgang des zweiten D-Flip-Flops 31 wird ein weiterer Transistor angesteuert. Über diesen Transistor kann das Absolutsignal 16 erzeugt werden.

Die in Figur 1 vorgeschlagene prinzipielle Anordnung dient der störsicheren bidirektionalen Übertragung des Absolutsignals 46 zwischen dem Rechner 10 und der Peripherie 14. Bei dem Rechner 10 kann es sich um einen Personal Computer handeln, der in bekannter Weise über Tastatur und Maus als Peripherie 14 angesteuert werden soll. Zwischen Rechner 10 und Peripherie 14 ist eine lange Übertragungsstrecke zu überwinden, was mit einem herkömmlichen Absolutsignal 46 nur mit großen Störungen auf Kosten der Datensicherheit möglich wäre. Als Peripherie 14 könnte beispielsweise auch ein Bildschirm verwendet werden.

Die in der Signalverarbeitung 12 angeordnete Arbitrierungslogik 20 stellt sicher, daß bei einem Sendevorgang des Rechners 10 von der Peripherie 14 keine Daten auf die Absolutsignalübertragungsleitung 16 gegeben werden können. Die Datenübertragung in Richtung zu dem Rechner 10 wird erst dann freigegeben, wenn die Arbitrierungslogik 20 den Ende des Sendevorgangs des Rechners 10 erkannt hat. Bei dem Absolutsignal 46 handelt es sich um ein Open-Collector-Signal, das standardmäßig zum Datenaustausch zwischen Personal Computer und beispielsweise Tastatur vorgesehen ist. Der High-Pegel könnte bei einem Spannungsniveau von 5 Volt erreicht sein. Dieses Absolutsignal 46 setzt der Transceiver 35 in zwei differentielle Signale 48, 50 um. Hierbei wird das Bezugspotential des ersten differentiellen Signals 48 als zweites differentielles Signal 50 zusätzlich übertragen. Gegebenenfalls auftretende Störungen der differentiellen Signalübertragungsleitung 18 werden die beiden differentiellen Signale 48, 50 in der gleichen Weise beeinflussen. Die Rückwandlung der differentiellen Signale 48, 50 in das Absolutsignal 46 erfolgt über Differenzbildung. Dadurch werden die Störeinflüsse eliminiert, so daß das daraus entstehende Absolutsignal 46 keine Störungen aufweist, die beispielsweise im Zuge der langen Übertragungsstrecke anderenfalls aufgetreten sein könnten. Als Transceiver 35 findet beispielsweise ein sogenannter CAN-Bus-Transceiver Verwendung, der das Absolutsignal 46 und die differentiellen Signale 48, 50 zur Verwendung des in der Kraftfahrzeugindustrie geläufigen CAN-Bus umsetzt. Die in Figur 1 gezeigte Anordnung kann je nach Anzahl der zu übertragenden Signale wie beispielsweise Tastatursignal, Maussignal, Taktsignal entsprechend erweitert werden. An der grundsätzlichen Funktionsweise ändert sich jedoch nichts.

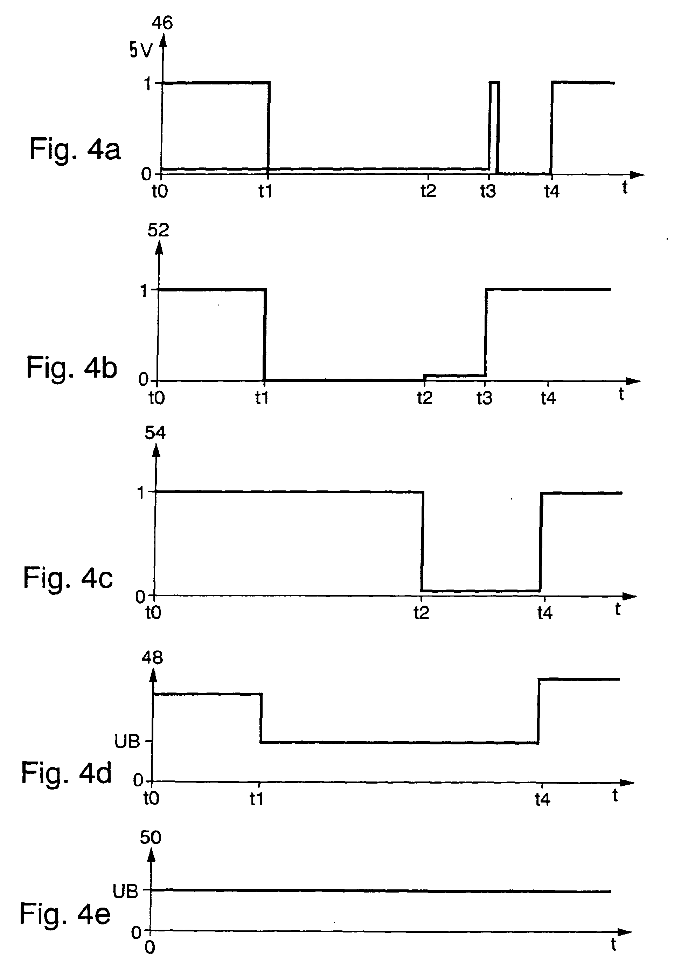

Die prinzipielle Arbeitsweise der Arbitrierungslogik 20 gemäß Figur 2 wird im folgenden in Verbindung mit den Signalverläufen der Figur 4a - 4e erläutert. Ab dem Zeitpunkt T0 sendet und empfängt der Rechner 10 keine Daten über die Absolutsignalübertragungsleitung 16. Korrespondierend dazu nimmt das Absolutsignal 46 den Wert Logisch 1 an. Zum Zeitpunkt T1 sendet der Rechner 10 Daten an die Peripherie 14. Hierzu wird beispielsweise der in Figur 3 dargestellte Sendetransistor 21 angesteuert, so daß das Absolutsignal 46 den Wert Logisch 0 annimmt. Zugleich wird davon ausgegangen, daß die Peripherie 14 zu diesem Zeitpunkt keine Daten an den Rechner 10 sendet. Entsprechend dem Open-Collector-Signal gibt daher der Transceiver 35 ein Arbitrierungssignal 54 mit dem Zustand Logisch 1 an das zweite Oder-Gatter 43 ab. Dessen Ausgangssignal nimmt in jedem Fall den Zustand Logisch 1 an. Das über den ersten Invertierer 42 invertierte Signal mit dem Zustand Logisch 0 liegt an dem einen Eingang des ersten Oder-Gatters 41 an. Wechselt nun auf Grund des Sendevorgangs des Rechners 10 das Absolutsignal 46 von dem Zustand Logisch 1 in den Zustand Logisch 0 (Zeitpunkt T1), wie in Figur 4a dargestellt, wechselt auch das Ausgangssignal des ersten Oder-Gatters 41 von Logisch 1 auf Logisch 0, was dem Arbitrierungsausgangssignal 52 entspricht. Der Transceiver 35 setzt dieses Arbitrierungsausgangssignal 52 in ein differentielles Signal 48, 50 um. Solange das Arbitrierungsausgangssignal 52 den Zustand Logisch 0 annimmt - dem Rechner 10 ist die Berechtigung als Sender erteilt - kann ein eventuell erfolgter Sendevorgang der Peripherie 14 die Absolutsignalübertragungsleitung 16 nicht beeinflussen. Dies wird durch die Beaufschlagung des zweiten Oder-Gatters 43 mit dem Wert Logisch 1 während des Sendevorgangs des Rechners 10 erreicht. Dies entspricht dem Zustand ab dem Zeitpunkt T2. Zum Zeitpunkt T3 endet der Sendevorgang des Rechners 10. Dadurch wechselt der logische Zustand des Arbitrierungssignals 52. Das zweite Oder-Gatter 43 sperrt nun das Arbitrierungseingangssignal 54 nicht mehr. So kann die Absolutsignalübertragungsleitung 16 den Wert des Arbitrierungseingangssignals 54 annehmen, der im gezeichneten Beispiel zwischen den Zeitpunkten T2 und T4 den Sendevorgang der Peripherie 14 signalisiert. Der Rechner 10 erkennt das eingehende Absolutsignal 46 als von der Peripherie 14 gesendet und bearbeitet es weiter. Zum Zeitpunkt T4 ist das Ende des Sendevorgangs der Peripherie 14 erreicht, so daß das Arbitrierungseingangssignal 54 in den Zustand Logisch 1 wechselt. Es zieht den Wechsel des Absolutssignals 46 in der gezeigten Weise nach sich. Damit ist wieder der Zustand zum Zeitpunkt T0 erreicht. In entprechender Weise bewirkt die Arbitrierungslogik 20 bei zuerst erkanntem Sendevorgang der Peripherie 14, daß ein zwischenzeitlich vom Rechner 10 geäußerter Sendewunsch unterdrückt wird, bis das Ende des Sendevorgangs der Peripherie 14 erreicht ist.

Die Funktionsweise der Anordnung gemäß Figur 3 unterscheidet sich nicht von derjenigen nach Figur 2. Zusätzlich ist hier noch ein Schmitt-Trigger 25 vorgesehen, der eine möglicherweise flach ansteigende Flanke des Absolutsignals 16 in ein Rechtecksignal umsetzt. Die D-Flip-Flops 29, 31 werden mit einem nicht dargestellten Takt beaufschlagt und übernehmen bei jedem Takt das inzwischen anstehende Eingangssignal. Die Überwachung der Eingangssignale der Arbitrierungslogik 20, nämlich Absolutsignal 46 und Arbitrierungseingangssignal 54, folgt immer abwechselnd mit dem Takt. Bei der ersten Taktzeit wird das Absolutsignal 46, bei der zweiten Taktzeit das Arbitrierungseingangssignal 54, bei der dritten Taktzeit wiederum das Absolutsignal 46 überwacht usw.. Wenn die Peripherie 14 sendet und die Arbitrierungslogik 20 der Peripherie 14 auch die Sendeberechtigung für die Absolutsignalübertragungsleitung 16 gegeben hat, wird das am Ausgang des Oder-Gatters 33 anstehende Signal Logisch 0 invertiert, um damit den Sendetransistor anzusteuern. Dieser bewirkt den Signalwechsel des Absolutsignals 46 auf Logisch 0.

Bevorzugte Verwendung findet die erfindungsgemäße Vorrichtung für Computersysteme im Industrieeinsatz, bei dem die Computer an von der Peripherie 14 weiter entfernten Stellen angeordnet sind. Die beschriebene Vorrichtung verhindert Datenkollisionen und ermöglicht eine störsichere Datenübertragung von und zur beschriebenen Computerperipherie.

## Patentansprüche

1. Vorrichtung zur bidirektionalen Signalübertragung zwischen einem Rechner (10) und einer Peripherie (14), mit einer Arbitrierungslogik (20) zur Überwachung und Beeinflussung der Zugriffsberechtigung auf zumindest eine Signalübertragungsleitung (16, 18), mit einem Transceiver (35), der ein Absolutsignal (16) in zumindest ein differentielles Signal (48, 50) umsetzt, wobei die Arbitrierungslogik (20) das zumindest eine Absolutsignal (46) über die Absolutsignalübertragungsleitung (16) erhält oder abgibt, die Arbitrierungslogik (20) zumindest ein Arbitrierungsausgangssignal (52) an den Transceiver (35) abgibt, und der Transceiver (35) der Arbitrierungslogik (20) zumindest ein Arbitrierungseingangssignal (54) zuführt.

2. Vorrichtung nach Anspruch 1, **dadurch gekennzeichnet, daß** die Arbitrierungslogik (20) Mittel aufweist, die bei einem mit einer Datenübertragung korrespondierendem eingehenden Absolutsignal (46) das Arbitrierungseingangssignal (54) nicht auf die Absolutsignalübertragungsleitung (16) weiterleitet.

3. Vorrichtung nach einem der vorhergehenden Ansprüche, **dadurch gekennzeichnet, daß** die Arbitrierungslogik (20) Mittel aufweist, die bei einem mit einer Übertragung korrespondierenden Arbitrierungseingangssignal (54) ein mit einer Datenübertragung korrespondierendes Arbitrierungsausgangssignal (52) an den Transceiver (35) abgibt.

4. Vorrichtung nach einem der vorhergehenden Ansprüche, **dadurch gekennzeichnet, daß** die Arbitrierungslogik (20) und der Transceiver (35) zu einer Baugruppe integriert sind.

5. Vorrichtung nach einem der vorhergehenden Ansprüche, **dadurch gekennzeichnet, daß** das Absolutsignal (46) einem Schmitt-Trigger (25) zugeführt ist.

6. Vorrichtung nach einem der vorhergehenden Ansprüche, **dadurch gekennzeichnet, daß** der Transceiver (35) die Umsetzung von Absolutsignal (46) und differentielle Signale (48, 50) und umgekehrt in Verbindung mit einem Bus-Protokoll realisiert.

7. Vorrichtung nach einem der vorhergehenden Ansprüche, **dadurch gekennzeichnet, daß** ein Rechner (10) über eine Absolutsignalleitung (16) mit der Arbitrierungslogik (20) verbunden ist, die mit dem Transceiver (35) Signale austauscht, wobei zumindest eine differentielle Signalübertragungsleitung (18) zu einem weiteren Transceiver vorgesehen ist, der Signale mit einer weiteren Arbitrierungslogik austauscht, die über eine weitere Absolutsignalübertragungsleitung mit der Peripherie (14) Daten austauscht.

## Claims

1. Apparatus for bidirectional signal transmission between a computer (10) and a peripheral area (14), having arbitration logic (20) for monitoring and influencing the access authorization of at least one signal transmission line (16, 18), having a transceiver (35) which converts an absolute signal (16) into at least one differential signal (48, 50), with the arbitration logic (20) obtaining or outputting the at least one absolute signal (46) via the absolute signal transmission line (16), the arbitration logic (20) outputting at least one arbitration output signal (52) to the transceiver (35), and the transceiver (35) supplying at least one arbitration input signal (54) to the arbitration logic (20).

2. Apparatus according to Claim 1, **characterized in that** the arbitration logic (20) has means which, for an incoming absolute signal (46) which corresponds to a data transmission, do not forward the arbitration input signal (54) to the absolute signal transmission line (16).

3. Apparatus according to one of the preceding claims, **characterized in that** the arbitration logic (20) has means which, for an arbitration input signal (54) which corresponds to a transmission, output an arbitration output signal (52) corresponding to a data transmission to the transceiver (35).

4. Apparatus according to one of the preceding claims, **characterized in that** the arbitration logic (20) and the transceiver (35) are integrated to form an assembly.

5. Apparatus according to one of the preceding claims, **characterized in that** the absolute signal (46) is supplied to a Schmitt trigger (25).

6. Apparatus according to one of the preceding claims, **characterized in that** the transceiver (35) implements the conversion of the absolute signal (46) and the differential signals (48, 50) and vice versa in connection with a bus protocol.

7. Apparatus according to one of the preceding claims, **characterized in that** a computer (10) is connected by means of an absolute signal line (16) to the arbitration logic (20), which interchanges signals with the transceiver (35), wherein at least one differential signal transmission line (18) is provided for a further transceiver, which interchanges signals with further arbitration logic, which interchanges data with the peripheral area (14) via a further absolute signal transmission line.

## Revendications

1. Dispositif pour la transmission bidirectionnelle de signaux entre un calculateur (10) et un périphérique (14) comportant une logique d'arbitrage (20) pour surveiller et influencer l'autorisation d'accès à au moins un ligne de transmission de signaux (16, 18), un émetteur-récepteur (35) qui convertit un signal absolu (16) en au moins un signal différentiel (48, 50),
la logique d'arbitrage (20) recevant au moins un signal absolu (46) par la ligne de transmission de signaux absolus (16) ou envoyant un tel signal, la logique d'arbitrage (20) émettant au moins un signal de sortie d'arbitrage (52) vers le récepteur-émetteur (35) et le récepteur-émetteur (35) fournit à la logique d'arbitrage (20) au moins un signal d'entrée d'arbitrage (54).

2. Dispositif selon la revendication 1,
**caractérisé en ce que**
la logique d'arbitrage (20) comprend des moyens qui, pour un signal absolu (46) d'entrée, correspondant à une transmission de données, ne transmettent pas le signal d'entrée d'arbitrage (54) à la ligne de transmission de signaux absolus (16).

3. Dispositif selon l'une des revendications précédentes,
**caractérisé en ce que**
la logique d'arbitrage (20) comporte des moyens qui, pour un signal d'entrée d'arbitrage (54) correspondant à une transmission, fournissent un signal de sortie d'arbitrage (52) correspondant à une transmission de données vers le récepteur-émetteur (35).

4. Dispositif selon l'une des revendications précédentes,
**caractérisé en ce que**
la logique d'arbitrage (20) et le récepteur-émetteur (35) sont intégrés dans un ensemble.

5. Dispositif selon l'une des revendications précédentes,
**caractérisé en ce que**
le signal absolu (46) est fourni à un déclencheur de Schmitt (25).

6. Dispositif selon l'une des revendications précédentes,
**caractérisé en ce que**
l'émetteur-récepteur (35) réalise la conversion de signaux absolus (46) en signaux différentiels (48, 50) et inversement en liaison avec un protocole de bus.

7. Dispositif selon l'une des revendications précédentes,
**caractérisé en ce qu'**
un calculateur est relié par une ligne de signaux absolus (16) à une logique d'arbitrage (20) qui échange les signaux avec le récepteur-émetteur (35) et au moins une ligne de transmission de signaux différentiels (18) est prévue vers un autre récepteur-émetteur qui échange les signaux avec une autre logique d'arbitrage et celle-ci échange des données par une autre ligne de transmission de signaux absolus avec le périphérique (14).
